# EUROPEAN PATENT APPLICATION

(11) **EP 1 420 586 A1**
(43) Date of publication of application: **19.05.2004**
(21) Application number: 02751713.5
(22) Date of filing: 26.07.2002
(51) Int. Cl.: H04N 7/08, G06F 17/60, H04N 7/173, G06F 13/00

(54) **CONTENT PROVIDING DEVICE, CONTENT PROVIDING METHOD, STRAM CONTRENT REPRODUCING PROGRAM, AND RECORDED MEDIUM ON WHICH STREAM CONTENT REPRODUCING PROGRAM IS RECORDED**

(30) Priority: 15.08.2001 JP 2001246347
(71) Applicant: Sony Corporation, Tokyo 141-0001 (JP)
(72) Inventor: WATANABE, Koichiro, c/o SONY CORPORATION, Tokyo 141-0001 (JP)
(74) Representative: Thévenet, Jean-Bruno
(86) International application number: PCT/JP2002/007589
(87) International publication number: WO 2003/017662

(57) **Abstract**

The present invention is applied in a case of distributing music and video through the internet, and sets a playback function of stream contents by control data 15 of the stream contents.

## Description

### BACKGROUND OF THE INVENTION

### TECHNICAL FIELD

The present invention relates to a contents providing apparatus, a contents providing method, a playback program for stream contents, and a recording medium on which a playback program for stream contents is recorded, and is able to apply to the case where music and video are distributed through the internet, for example. The present invention is able to reflect an intention of a distribution side to an operation of a reception side by setting a playback function of the stream contents in accordance with control data of the stream contents.

### BACKGROUND ART

Conventionally, in the distribution of information where contents thereof are changed in accordance with a lapse of time (here-in-after called as stream contents) such as music, movie, and the like, it is carried out to provide to a client terminal by way of a network such as the internet, and in the client terminal like this, such stream contents are provided to a user by decoding using a playback plug-in software which is installed in the web browser.

In such playback plug-in software, operation buttons such as a playback, a pause, or a fast-forward, and the like are to be displayed, and the playback of the stream contents is to be carried out by operating these buttons with a mouse.

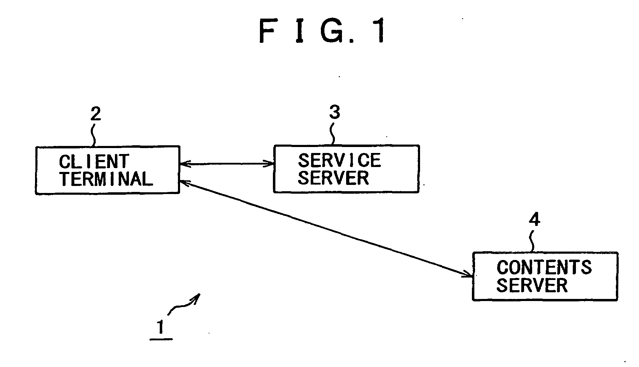

In other words, as shown in Fig. 1, in a distribution system 1 of this kind, a client terminal 2 is a computer connected to a network such as the internet or the like, and also is a receiving apparatus for the contents. The client terminal 2 accesses a service server 3 and a contents server 4 with the web browser, and further carries out the playback of the stream contents provided from the contents server 4 by the playback plug-in software.

The service server 3 functions as an Http server, and executes introductions or the like of the contents that are available for provision by accessing from the client terminal 2. The contents server 4 provides the contents by accessing from the similar client terminal 2.

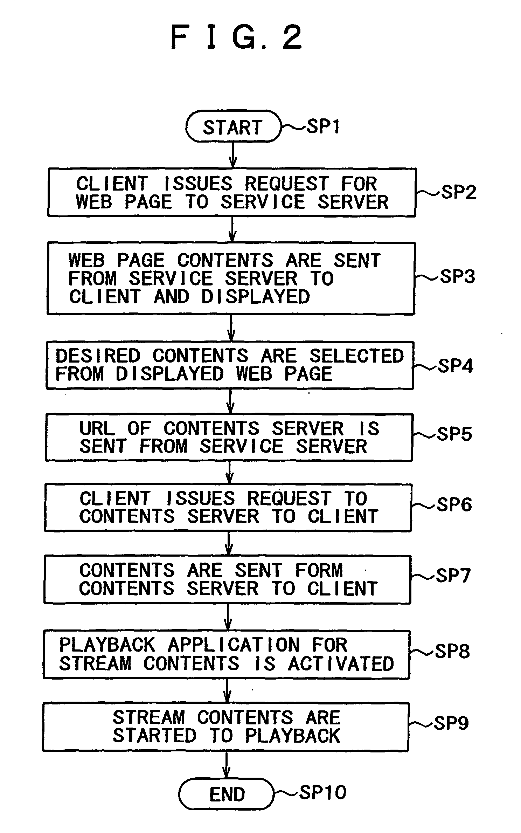

In such distribution system 1 like this, as shown in Fig. 2, by accessing the service server 3 from the client terminal 2, the processing proceeds form step SP1 to step SP2, and a request of the web page from the client terminal 2 is accepted with the service server 3. Based on this request, in a following step SP3, the service sever 3 transmits the web page contents introducing the stream contents available for distribution, and in the client terminal 2, the web page contents are displayed by the browser.

Further, in this system 1, in step SP4, the user desired stream contents are selected by the selection of a user in this web page contents, and in a succeeding step SP5, the corresponding URL of the contents server 4 is notified from the service server 3 by the selection of this user.

Further in a succeeding step SP6, the request by this URL is notified from the client terminal 2 to the contents server 4, and in a succeeding step SP7, provision of the stream contents is started from the contents server 4. Further, in a succeeding step SP8, a playback application for carrying out the playback of the stream contents is activated in the client terminal 2, and in a following step SP9, the processing proceeds to step SP10 after starting the playback of the stream contents, and then, this processing procedure is ended.

By the way, in this kind of the distribution of the stream contents, it is to be thought that an extremely important information is transmitted by burying in one part of the stream contents, and it is planned to keep everyone informed such important information. However, in the conventional manner, the playback of the stream contents is substantially assigned to a user's operation, and accordingly, it is thought that such part to which the important information is buried is fast-forwarded in spite of such intention of the transmission side.

Thereby, it is to be thought that if it is able to reflect the intention of the distribution side to the operation of the reception side, a usability of the systems of this kind can be improved more remarkably.

### DISCLOSURE OF THE INVENTION

This invention is done in consideration of the above-mentioned points, and is to present a contents providing apparatus capable of reflecting an intension of a distribution side to an operation of a reception side, a contents providing method, a playback program for the stream contents, and a recording medium on which a playback program for the stream contents is recorded.

In order to solve the above problems, the present invention is applied to a contents providing apparatus for providing the stream contents to a client terminal by a contents distribution request from a client terminal, and transmits control data for setting a playback function for the stream contents to a corresponding client terminal.

According to the construction of the present invention, the present invention is applied to a contents providing apparatus for providing stream contents to a client terminal by a contents distribution request from a client terminal, and transmits control data for setting a playback function for the stream contents to a corresponding client terminal, so that it is able not to carry out a fast-forward at the part to which the important information is assigned, for example, and thereby, it is able to reflect the intension of the distribution side to the operation of the reception side.

In addition, the present invention is applied to a contents providing apparatus for receiving stream contents transmitted from a predetermined server and for providing to a client terminal, and sets a playback function for the stream contents by the control data of the stream contents.

According to the construction of the present invention, the present invention is applied to a contents providing apparatus for receiving stream contents transmitted from a predetermined server and for providing to a client terminal, and sets a playback function for the stream contents with control data of the stream contents, so that it is able not to carry out a fast-forward at the part to which the important information is assigned, for example, and thereby, it is able to reflect the intension of the distribution side to the operation of the reception side.

Further, the present invention is applied to contents providing method for providing stream contents by a contents distribution request from a client terminal, and transmits the control data for setting a playback function for the stream contents to a corresponding client terminal.

Thereby, according to the construction of the present invention, it is able to provide a contents providing method capable of reflecting an intension of the distribution side to an operation of the reception side.

Further, the present invention is applied to a playback program for stream contents, and sets a playback function of the stream contents by the control data of the stream contents.

Thereby, according to the construction of the present invention, it is able to provide a playback program for the stream contents capable of reflecting an intension of the distribution side to an operation of the reception side.

Further, the present invention is applied to a recording medium on which a playback program for stream contents is recorded, and the playback program for this stream contents sets a playback function of the stream contents by control data of the stream contents.

Thereby, according to the construction of the present invention, it is able to provide a recording medium on which a playback program for the stream contents is recorded capable of reflecting an intension of the distribution side to an operation of the reception side.

### BRIEF DESCRIPTION OF THE DRAWINGS

Fig. 1 is a block diagram showing a conventional distribution system.
Fig. 2 is a flow chart showing a processing procedure of a client terminal in the distribution system in Fig. 1.
Fig. 3 is a block diagram showing a distribution system related to one embodiment of the present invention.
Fig. 4 is a time chart for explaining the stream contents distributed from the distribution system in Fig. 3.
Fig. 5 is a chart for explaining a contents table of the stream contents in Fig. 4.
Fig. 6 is a plane view for showing a display image by a playback application for carrying out a playback of the stream contents in Fig. 4.
Fig. 7 is a flow chart for explaining the distribution of the stream contents in the distribution system in Fig. 3.

### BEST MODE FOR CARRYING OUT THE INVENTION

Detailed description of the preferred embodiment of the present invention is explained in detail with reference to the accompanying drawings here-in-after.

### (1) Construction of an embodiment:

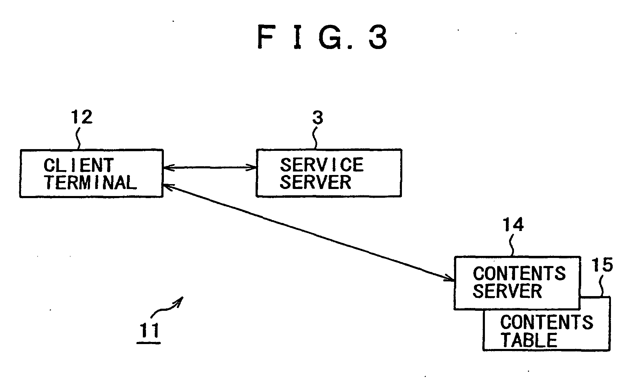

Fig. 3 is a block diagram that shows a distribution system related to an embodiment of the present invention. In this distribution system 11, a contents server 14 distributes stream contents by the access from a client terminal 12. In this case, the contents server 14 also distributes a contents table 15 of this stream contents to the client terminal 12.

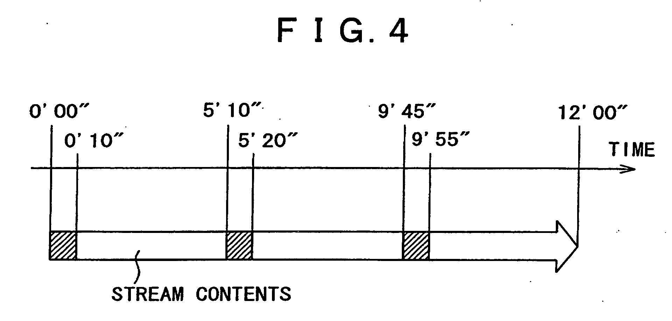

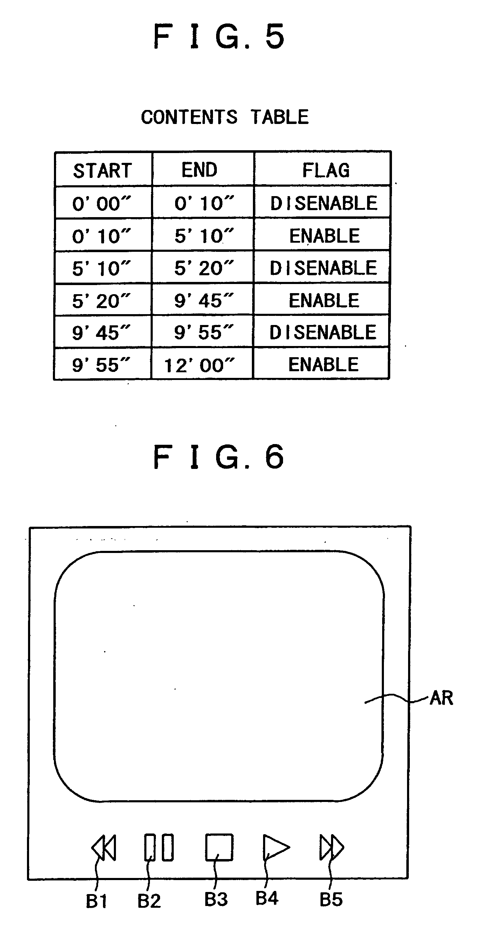

Here, the contents table 15 is a table of control data for controlling a playback function of the stream contents in a client terminal, and is a timetable formed with time code that is the time information of the stream contents as a reference. In other words, for example, as shown in Fig. 4, in the stream contents to be distributed to the client terminal 12 as described above, important information is respectively assigned to a range from 0 minute 00 second to 0 minute 10 seconds, a range from 5 minutes 10 seconds to 5 minutes 20 seconds, and a range from 9 minutes 45 seconds to 9 minutes 55 seconds in the time code, and when the playback function is to be changed at part where the respective important information is assigned, as shown in Fig. 5, the contents table 15 is set to the time codes specifying these ranges to start times and end times, respectively, and as shown in Fig. 3, the contents table 15 is expressed from this stream contents with plural parts, and is constructed to set a flag as the control data to every part. In this detailed description of the preferred embodiment, such important information is a commercial.

Specifically, in this embodiment, this flag makes the fast-forward operation difficult by Enable, and makes the fast-forward operation possible by Disenable in the playback function of the playback application.

On the contrary, the client terminal 12 accesses the service server 3, and the contents server 4 by a predetermined browser software, and down-loads the stream contents, and further playbacks this stream contents by a playback application which is the plug-in software of this browser software, and this playback application is arranged to change the playback functions based on the contents table 15 as a reference.

Namely, Fig. 6 is a front view showing a window displayed on the client terminal 12 by the activation of this playback application. Here, in this window, a display area AR of the stream contents is provided at a center, and below this display area AR, various operation buttons B1 ... B5 are located. These buttons B1 ... B5 comprise symbols to be located on operation buttons of a video tape recorder, and from left end, a rewind button B1, a pause button B2, a stop button B3, a playback button B4, and a fast-forward button B5 are to be respectively located.

The client terminal 12, in response to the operations of these buttons B1 ... B5 by a mouse, starts to carry out the playback of the received stream contents, and in addition, the processing of the playback is changed.

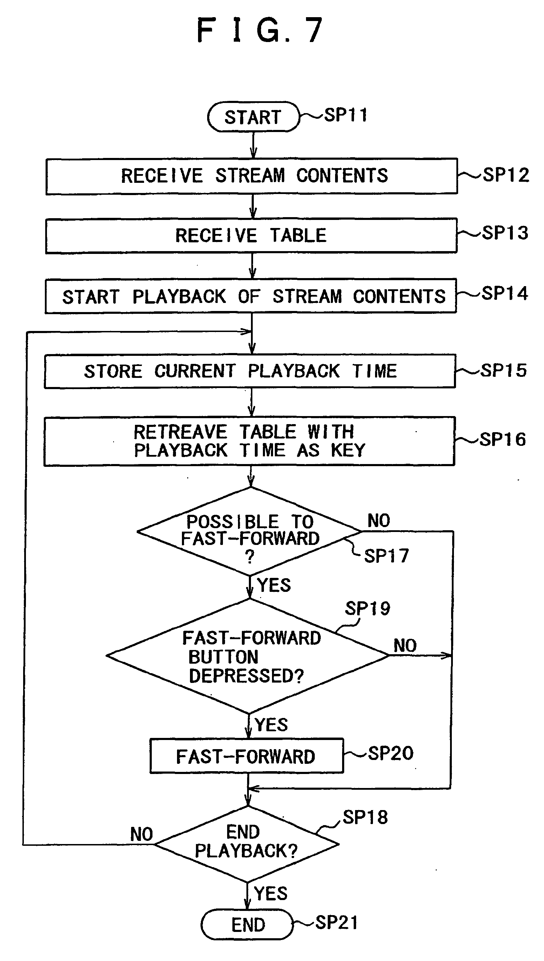

Fig. 7 is a flow chart showing a processing procedure of the stream contents in this client terminal 12. The client terminal 12 executes this procedure by the web browser, and further by the playback application activated by down-loading the stream contents, and processes the operation of the fast-forward button B5 by a user.

Namely, when a user desired stream content is selected from a list of the stream contents provided by the service server 3, the client terminal 12 acquires a corresponding URL by accessing the service server 3, and accesses the contents server 14 based on this URL. In this way, after transmitting a distribution request for the stream contents to the contents server 14, the client terminal 12 moves the processing from a step SP11 to a step SP12, receives the stream contents transmitted from the contents server 14, and at a following step SP13, further receives the corresponding contents table 15.

Furthermore, after completing the reception of these, in a following step SP14, a playback application is activated, and the playback of the stream contents is started. When starting the playback in this way, the client terminal 12, in a continuing step SP15, detects the time code of the stream contents now on playback, and the time code is recorded in a memory. Furthermore, in a succeeding step SP16, it searches the contents table 15 by a playback time of this time code as a key.

The client terminal 12 determines, in a following step SP17, whether the flag for prohibiting the fast-forward is Disenable or not based on the search result. When this flag is set to be Enable, the client terminal 12 moves the processing from the step SP17 to a step SP18, because a negation result is obtained in the step SP17. In this case, the client terminal 12 changes the display for the fast-forward button B5 to be pale, thereby, makes a user feel that the client terminal 12 is not able to operate the fast-forward button B5.

The client terminal 12 determines whether the playback is completed or not in the continuing step SP18, and when a negation result is obtained here, the processing goes back to the step SP15. Thereby when the operation of the fast-forward is prohibited by the contents table 15, the client terminal 12 is so constructed to be set the function of the playback processing not to execute the fast-forward operation about this part.

On the contrary, when a flag is set to be Disenable in the contents table 15, because an affirmation result is provided with the step SP17, the client terminal 12 moves the processing from the step SP17 to a step SP19. Here, the client terminal 12 determines whether the button B5 of the fast-forward is operated or not, and if a negation result is provided, then the processing moves to the step SP18.

On the contrary, the button B5 of the fast-forward is operated by a user, because an affirmation result is provided at the step SP19, the client terminal 12 moves the processing from the step SP19 to a step SP20. Then, the client terminal 12 executes a fast-forward processing by carrying out the playback by jumping predetermined pictures, and then moves the processing to the step SP18.

Thereby, the client terminal 12 repeats the processing procedure of the steps SP17 - SP18 - SP17, the steps SP17 - SP19 - SP18 - SP17, or the steps SP17 - SP19 - SP20 - SP18 - SP17 while sequentially decoding pictures composing the stream contents, and is set to sequentially provide a user the stream contents by changing the playback function depending on the setting of the contents table.

Thus, when the playback of the stream contents is ended by repeating these processing, because an affirmation result is provided in step SP18, the client terminal 12 moves the processing to a step SP21 from the step SP18, and finishes this processing procedure.

In addition, the client terminal 12 detects the operation of a mouse by a user with regard to the other buttons B1 ... B4 simultaneously and in parallel with the processing from the step SP17 to the step SP18, and by the detection result, the operation is changed to execute the processing such as a rewind, a pause, and the like.

### (2) Operation of the embodiment:

In the above-mentioned construction, a list of the available stream contents is provided by accessing the service server 3 with the client terminal 12, and by the selection of the list by a user, the URL of the corresponding stream contents is provided from the service server 3, and then, the stream contents selected by the user are downloaded from the contents server 14 to the client terminal 12 by accessing the contents server 14 with this URL. Thereby, in this distribution system 11, it is possible to provide user desired stream contents to the client terminal 12.

In this distribution system 11, when downloading the stream contents to the client terminal 12 from the contents server 14 in this way, in case of the playback of this stream contents, the control data for setting a playback function of the client terminal 12 are downloaded in the client terminal 12 as the contents table 15 by a form of a timetable. Furthermore, when, by these contents table 15, the playback of the stream contents is sequentially carried out, a function of a playback application is set.

Accordingly, in this distribution system 11, it is set so as not to carry out a fast-forward with regard to a commercial that is valuable information assigned to the stream contents, and is able to reflect an intention of the distribution side, namely, a desire to plan to keep everyone informed about such valuable information, to the operations of the reception side.

### (3) An effect of the embodiment:

According to the above-mentioned construction, it is able to reflect an intention of the distribution side to an operation of the reception side by setting the playback function of the stream contents with the control data of the stream contents.

It is also able to precisely reflect the intention of the distribution side to the operations of the reception side by transmitting the control data based on a time table with the time information of the stream contents as a reference, and by setting the playback functions depending on the playback part of the stream contents.

In addition, the setting of the playback functions by such control data is a setting to make the fast-forward operation difficult in a commercial inserted by the stream contents, so that an effect of an advertisement can be shown enough.

### (4) Other embodiment:

In this case, in the above-described embodiment, it is described in the case where the fast-forward operation is made difficult as the setting of the playback function according to the control data, but the present invention is not limited to this, and it is able to widely apply to the setting of various playback functions such as the case where it is set to be difficult to carry out the operation corresponding to channel change in the television broadcast, where it is set to be difficult to carry out the operation corresponding to a pause, or the like in the distribution of the live stream contents.

In addition, in the above-described embodiment, it is described in the case where the control data is transmitted in accordance with the time table referenced to the time code as a reference, but the present invention is not limited to this, and various transmission methods such as the case where data of the stream contents is transmitted by superposing the control data there on, or the like are able to be widely applied.

In addition, in the above-described embodiment, it is described in the case where the stream contents and the contents table are transmitted from the contents server, but the present invention is not limited to this, and they may be transmitted form respective server. Further in this case, it is able for the contents table to take a role of "Authorization Key" enabling the playback of the stream contents by setting "Playback Enable" or "Playback Disenable" in accordance with the contents table.

In addition, in the above-described embodiment, it is described in the case where the stream contents are carried out the playback after once received, but this invention is not limited to this, and is able to widely apply to a case where the stream contents are carried out the playback while simultaneously receiving.

As described above, according to the present invention, it is able to reflect the intention of the playback side to the operations of the reception side by setting the playback functions of the stream contents in accordance with the control data of the stream contents.

### USABILITY IN THE INDUSTRY

The present invention relates to a contents providing apparatus, a contents providing method, a playback program for stream contents, and a recording medium recorded a playback program for stream contents, and is able to apply in case of distributing music, and video through the internet, for example.

## Claims

1. In a contents providing apparatus for providing stream contents to a client terminal in response to a request for contents distribution from the client terminal, said contents providing apparatus is **characterized by**:
transmitting control data for setting a playback function for the stream contents to the corresponding said client terminal.

2. The contents providing apparatus according to Claim 1, **characterized by**:
transmitting said control data in accordance with a time table which is based on a time information of said stream contents as a reference.

3. The contents providing apparatus according to Claim 1, **characterized in** which:
said setting of the playback function by said control data is a setting to make a fast-forward operation difficult during a commercial inserted in said stream contents.

4. In a contents providing apparatus for receiving stream contents transmitted from a predetermined server, and providing to a user, said contents providing apparatus is **characterized in** which:
a playback function for said stream contents is set corresponding to control data of said stream contents.

5. In the contents providing apparatus according to Claim 4, **characterized in** which:
said control data is received in accordance with a time table based on a time information of said stream contents as a reference; and
in accordance with said setting of the playback function for said stream contents referenced to said time information, said contents providing apparatus sequentially changes the playback function depending on a lapse of time of said stream contents.

6. The contents providing apparatus according to Claim 4, **characterized in** which:
said setting for the playback function by said control data is a setting to make a fast-forward operation difficult during a commercial inserted in said stream contents.

7. In a contents providing method for providing stream contents to a client terminal in response to a request for contents distribution, said contents providing method is **characterized by**:
transmitting control data for setting a playback function for said stream contents to corresponding said client terminal.

8. In a contents providing method for receiving stream contents transmitted from a predetermined server, and providing to a user, said contents providing method is **characterized by**:
setting a playback function for said stream contents corresponding to control data of said stream contents.

9. In a playback program for carrying out a playback of stream contents on a client terminal which receives said stream contents transmitted from a predetermined server, said playback program for the stream contents is **characterized by**:
setting a playback function for said stream contents corresponding to control data of said stream contents.

10. In a recording medium on which a playback program for carrying out a playback of stream contents is recorded, and in a client terminal which receives said stream contents transmitted from a predetermined server, said recording medium on which said playback program for stream contents is recorded is **characterized in** which:
said playback program for the stream contents sets a playback function for said stream contents corresponding to control data of said stream contents.
